# EUROPEAN PATENT SPECIFICATION

(11) **EP 2 069 190 B1**
(45) Date of publication and mention of the grant of the patent: **29.08.2012**
(21) Application number: 06774999.4
(22) Date of filing: 19.09.2006
(51) Int. Cl.: B62M 1/10

(54) **A CRANK ASSEMBLY**
KURBELANORDNUNG
ENSEMBLE MANIVELLE

(43) Date of publication of application: 17.06.2009
(73) Proprietor: Sperero Pty Ltd, Beaumaris VIC 3193 (AU)
(72) Inventor: MARTIN, Colin, Arthur, Beaumaris, Victoria 3193 (AU)
(74) Representative: Findlay, Alice Rosemary
(86) International application number: PCT/AU2006/001372
(87) International publication number: WO 2007/033412

(56) References cited:
- EP-A2- 0 203 054
- WO-A1-93/08071
- BE-A- 377 432
- DE-A1- 19 614 744
- FR-A- 867 861
- FR-A- 872 462
- FR-A- 902 955
- GB-A- 2 246 829
- US-A- 4 753 127

## Description

### Field of the invention

The present invention relates to a crank assembly for use on a human powered machine.

### Background

The drive crank assemblies on many human powered machines, such as bicycles, are traditionally designed to be as rigid as practical such that the rotational position of the cranks is equal to the rotational position of the crank wheel (which on a bicycle is commonly referred to as a chain ring). On a traditional bicycle, the leg force of the cyclist is a maximum in the region where the pedals are travelling approximately vertically, and is a minimum in the region where the pedals are travelling horizontally. Consequently, the force transferred to the rear (driving) wheel is cyclic, and oscillates between a maximum and minimum.

It is known to introduce a level of compliance in the drive train of human powered cycles. Some prior art crank assemblies introduce compliance such that the cranks of the assembly can be temporarily advanced with respect to the teeth of the chain ring. UK Patent No. GB 2246829, in the name of Stephen Karp, proposes a chain wheel that has ribs extending between a chain wheel boss and the chain wheel rim. However, this arrangement is deficient in that it cannot achieve sufficient compliant advancement of the cranks relative to the chain wheel rim. Consequently, the stored energy is insufficient to provide an appreciable effect in the performance of the bicycle.

FR 902955 discloses a crank assembly incorporating an elastic member between the pedals and chain of a bicycle crank. The elastic member can take the form of a clock spring or coil springs.

GB 2246829 discloses a crank driven wheel for a bicycle incorporating ribs between the crank and the outer rim of the wheel where the nbs can deform to store some energy.

FR 867861 discloses a crank assembly according to the preamble of claim 1 in which rotational motion from the crank is transferred to a pinion through springs fixed to the axle and which bear against fingers fixed to the pinion.

### Summary of the invention

According to a first aspect of the present invention, there is provided a crank assembly for use on a human powered machine, the crank assembly comprising:
one or more cranks that are connectable to opposing ends of an axle of the machine;
a chain ring having teeth for engagement with a drive element, the chain ring being capable of being supported on the axle such that the chain ring can rotate relative to the axle; and
a set of two or more leaf springs, each spring having a root that can be rotationally fixed relative to the axle and a tip that bears against the chain ring to impart force to the chain ring; and
wherein each spring tapers from the root to the tip in a plane of the chain ring.

Preferably, the springs can allow a compliant rotational advancement of the cranks relative to the chain ring of at least 5°.

Preferably, the springs can allow a compliant rotational advancement of the cranks relative to the chain ring of at least 10°.

Preferably, the springs can allow a compliant rotational advancement of the cranks relative to the chain ring of at least 15°.

Preferably, the springs can allow a compliant rotational advancement of the cranks relative to the chain ring of up to approximately 25°.

In some embodiments, each spring can be positioned to extend radially from the axle. Alternatively, each spring can be positioned to extend at least partially tangentially with respect to the axle. Furthermore, each spring can be off-set in relation to the axle.

The springs can be linear when no external forces are applied to the crank assembly. Alternatively, the springs can be curved when no external forces are applied to the crank assembly.

Preferably, the teeth lie in the plane of the chain ring.

Preferably, the crank assembly further comprises supports that laterally support the springs toward the tip.

Preferably, the supports comprise load guides that are each fastened to one side of the chain ring and provide lateral support on the respective side of a respective spring.

Preferably, the supports comprise a support disc that is positioned on one side of the chain ring and provides lateral support on the respective side to the springs.

Preferably, the support disc can be supported on the axle, and the chain ring is secured to the support disc.

In one embodiment, the crank assembly further comprises a crank boss that is mountable on the axle and can be rotationally fixed to the axle, each spring being attached to the crank boss.

Preferably, a portion of each spring is received in a slot in the crank boss.

In another embodiment, although not the only other embodiment, each spring can be secured to the axle.

Preferably, the axle is a hollow cylinder having a plurality of holes in the cylinder, and wherein the root of each spring can pass through one of the holes in the axle.

Preferably, the axle has two opposing clamping elements disposed within the cylinder that are adapted to clamp the springs within the axle.

Preferably, the set of springs comprises less than 10 springs.

Typically, the set of springs comprises less than 8 springs.

In one embodiment, the set of springs comprises 5 springs.

Preferably, the crank assembly comprises:
two or more chain rings that are both supportable on the axle, each chain ring being able to independently rotate relative to the axle; and
one set of the leaf springs for each chain ring, such that the springs in each set independently impart force to the respective chain ring.

According to a second aspect of the invention there is provided a crank assembly for use on a human powered machine, the crank assembly comprising:
cranks connectable to opposing ends of an axle of the machine;
a chain ring having teeth for engagement with a drive element, the chain ring capable of being supported on the axle such that the chain ring can rotate relative to the axle; and
a set of two or more leaf springs, each spring having a root that can be rotationally fixed relative to the axle and a tip that bears against the chain ring to impart force to the chain ring; and
wherein each spring is formed so that the set of springs can allow a compliant rotational advancement of the cranks relative to the chain ring of at least 5°.

Preferably, the springs can allow a compliant rotational advancement of the cranks relative to the chain ring of at least 10°.

Preferably, the springs can allow a compliant rotational advancement of the cranks relative to the chain ring of at least 15°.

Preferably, the springs can allow a compliant rotational advancement of the cranks relative to the chain ring of up to approximately 25°.

According to a third aspect of the present invention there is also provided a human powered machine that comprises a crank assembly according to either the first or second aspects.

Preferably, the machine is in the form of a bicycle.

### Brief description of the drawings

In order that the invention may be more easily understood, embodiments will now be described, by way of example only, with reference to the accompanying drawings, in which:
- Figure 1:: is a schematic side view of a crank assembly for a bicycle according to a first embodiment of the present invention;
- Figure 2:: is a partial cross sectional view of the crank of figure 1, as seen along the line A-A;
- Figure 3:: is a side view of the crank boss used in the crank assembly of figure 1;
- Figure 4:: is a plan view of the body of the crank boss of figure 3;
- Figure 5:: is a bottom view of the body of the crank boss of figure 3;
- Figure 6:: is a plan view of the load guide used in the crank assembly of figure 1;
- Figure 7:: is side elevation of the load guide, as seen along the line B-B in figure 7, mounted in the crank assembly of figure 1;
- Figure 8:: is a schematic side elevation of a leaf spring that is used in the crank assembly of figure 1;
- Figure 9:: is a schematic view showing partial manufacture of the crank boss of figure 4;
- Figure 10:: is a side elevation of a crank assembly in accordance with a second embodiment of the present invention;
- Figure 11:: is a side elevation of a crank assembly in accordance with a third embodiment of the present invention;
- Figure 12:: is a perspective view of a bottom bracket, which can be used in a crank assembly in accordance with a third embodiment of the present invention;
- Figure 13:: is a side cross sectional view of the axle of the bottom bracket of figure 12;
- Figure 14:: is a side cross sectional view of the clamping elements of the axle of figure 13; and
- Figure 15:: is an end view of the axle shown in figure 13.

### Detail description

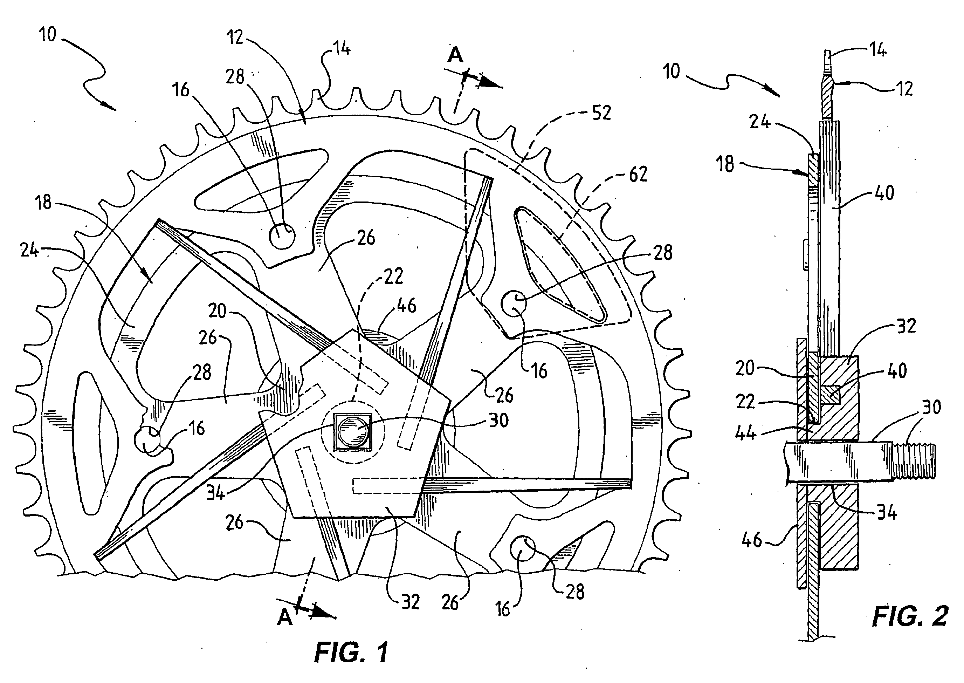

Figures 1 and 2 shows, schematically, a crank assembly 10 according to a first embodiment of the present invention. The crank assembly 10 can be fitted to a bicycle in which the cyclist drives pedal cranks (not shown) to impart rotational motion to the rear (driving) wheel of the bicycle, via the crank assembly 10 and chain (also not shown).

The crank assembly 10 has a chain ring 12, which is in the form of a thin ring provided with teeth 14 on the outer circumferential surface. It will be appreciated that the chain has slots which the teeth 14 engage to cause the chain to move. The chain ring 12 has five bolt holes 16 (four are shown in figure 1) that enable the chain ring 12 to be connected to a support disc 18. The support disc 18 has an inner portion 20, which has an central aperture 22; an outer portion 24; and five arms 26 that extend between the inner and outer portions 20, 24. The support disc 18 further has five bolt holes 28 (four of which are shown in figure 1) that align with the bolt holes 16 in the chain ring 12.

An axle 30 of the crank assembly 10 extends between the two pedal cranks, and is supported by bearings within the bottom bracket of the bicycle. The end portions of the axle 30 are provided with flats to ensure the axle 30 rotates with the pedal cranks. In this embodiment, the axle 30 has a square profile, as can be seen in figure 1. A crank boss 32 is provided, which has an aperture 34 that extends through the crank boss 32. The aperture 34 has a shape that complements the profile of the axle 30. Accordingly, the crank boss 32 is rotationally fixed to the axle 30. In this embodiment, the complementary aperture 34 is square.

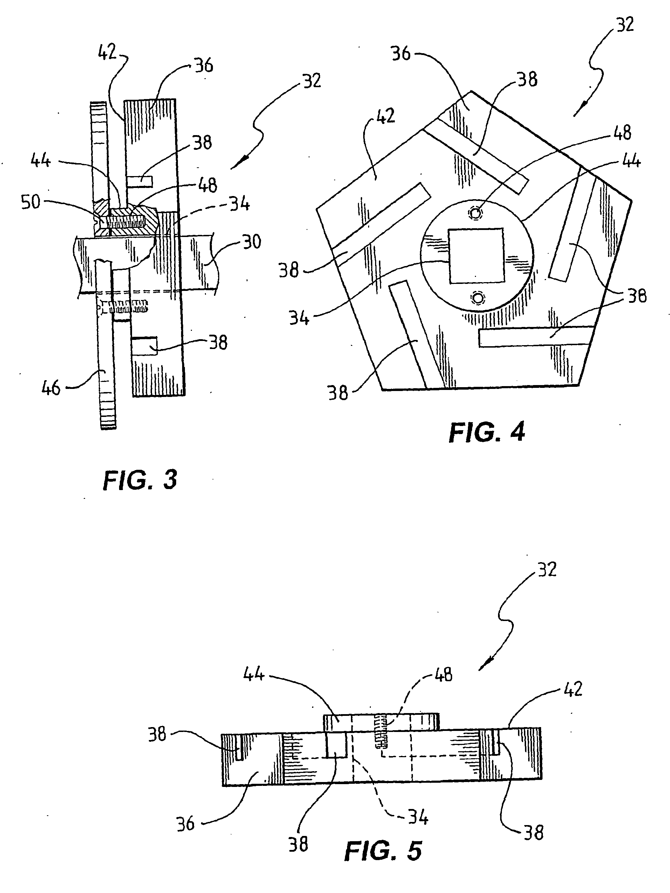

The crank boss 32, which is shown in figures 3 to 5, has a body 36 that is provided with five slots 38. Each slot 38 receives an elongate single leaf spring 40, as shown in figure 1. In this embodiment, the springs 40 are generally linear in their relaxed state. In this embodiment, as shown in figure 1, the springs 40 extend tangentially from the crank boss 32 with respect to the axle 30. As shown in figure 4, each slot 38 opens onto the rear surface 42 of the body 36. The body 36 also has a disc portion 44, which protrudes from the rear surface 42, and which has a circular outer shape that is concentric with the rotational axis of the crank boss 32. In this embodiment, the body 36 is machined to have a pentagonal shape. This is done merely to reduce weight of the crank assembly 10, and that the body 36 could be disc shaped. Furthermore, in this embodiment, there are five springs 40 and accordingly the body 36 has five slots 38. In addition, the body 36 is of pentagonal shape. In alternative embodiments, in which there are different numbers of springs and slots, the body may be machined to have different shapes.

The crank boss 32 further has a cover plate 46 that is in the form of an annular disc. Both the cover plate 46 and the disc portion 44 have holes 48 for receiving screws 50, such that the cover plate 46 is secured to the body 36. Thus, the disc portion 44 of the body 36 defines an annular cavity, within which the support disc 18 is received. As shown in figure 2, the disc portion 44 is shaped to be received in the central aperture 22 of the support disc 18. The support disc 18 is able to rotate relative to the crank boss 32, yet is laterally constrained by the cover plate 46 and body 36.

As described previously, each slot 38 opens onto the rear surface 42 of the body 44. Thus, each spring 40 is constrained on four sides by the body 36. As shown in figure 2, the support disc 18 provides additional constraint on each spring 40, preventing lateral movement of the spring 40. Accordingly, an inner end of each spring 40 is effectively embedded in the body 36, such that it is cantilevered from the body 36.

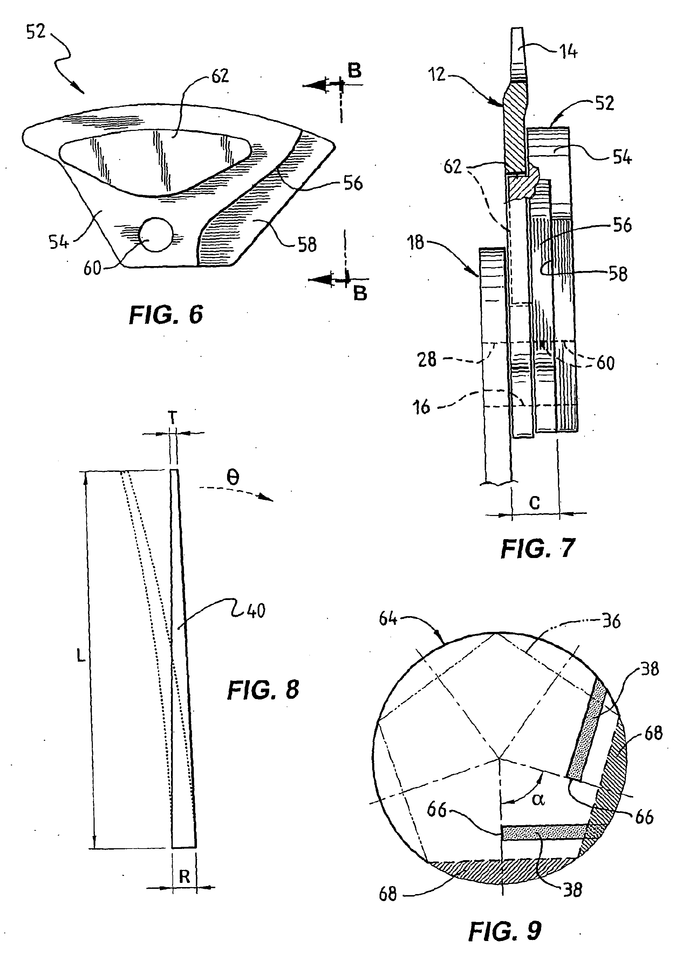

The crank assembly 10 is further provided with load guides 52, one of which is indicated in figure 1 by broken lines. The load guide 52, which is further illustrated in figures 6 and 7, has a body 54 with a contoured surface 56 that has the same contour as a portion of the chain ring 12. The body 54 further has a plate portion 58 that extends in the trailing direction (with respect to the forward driving direction of the crank assembly) from the contoured surface 56. The body 54 also has an aperture 60, and a plug 62.

As shown in figure 1, the chain ring 10 has five apertures, each of which is positioned radially outward of a respective one of the bolt holes 16. The plug 62 has a complementary shape to the apertures, such that the plug 62 of each load guide 52 is received in a respective one of the apertures. The aperture 60 in each load guide 52 is aligned with a respective bolt hole 16 in the chain ring 12.

As shown in figure 7, the aperture 60, bolt hole 16 in the chain ring 12, and bolt hole 28 in the support disc 18 are aligned for receiving a bolt (not shown). The bolt fastens the support disc 18, the chain ring 12 and the contoured surface 56 of the load guide 52 together.

As indicated in figures 1 and 2, an outer end (or "tip") of each spring 40 bears against the chain ring 12 and the contoured surface 56 of the load guide 52. Accordingly, rotational motion is imparted from the crank boss 32 to the chain ring 12 by the force applied by the springs 40 against the chain ring 12 and the load guides 52. The support disc 18, the chain ring 12 and the load guide 52 form an effective slot, as indicated by arrow C in figure 7. Thus, the outer end of each spring 40 is laterally constrained by the support disc 18 and the plate portion 58 of the load guide 52. It will be appreciated that, in this embodiment, the springs 40 all act in the same plane as the teeth 14 of the chain ring 12, and thus also the chain.

As the outer end of each spring 40 is not embedded (that is, cantilevered), the connection between the outer end of each spring 40 and the chain ring 12 / load guide 52 can be considered act as a pin joint. Thus, each spring 40, when loaded, will deform in a similar manner to the deflection of a cantilevered beam with a point load near the free end of the beam.

Figure 8 shows schematically a side elevation of a spring 40. Arrow θ indicates the direction of rotation of the spring 40 that is induced by the rotation of the cranks of the bicycle. Accordingly, the reaction force of the chain ring 12 against the tip of the spring 40 causes the spring to be deflected, as indicated by the dotted lines in figure 8. The spring 40 has a length L, a maximum thickness R (which is at the root of the spring 40, adjacent the crank boss 32), and minimum thickness T (which is at the tip that contacts the chain ring 12).

It can be seen that the spring 40 is tapered such that thickness decreases from the root of the spring 40 towards the tip. The depth of the spring 40, in the direction parallel to the axis of rotation of the axle 30, is constant along its length.

The shape of the springs 40, including the length and tapering, together with the stiffness of the material, effect the spring stiffness of the spring 40. Accordingly, the amount of deflection at the tip is partly related to these characteristics, as well as the load applied by the cyclist. However, by altering the length and amount of tapering of the springs 40, the energy taken up by the springs 40 (and subsequently released) can be tailored to the required application. For example, in activities in which the pedal forces are high it may be more desirable to have stiffer springs, and thus less deflection of the spring tip. An example of such an activity includes racing bicycles. In contrast, some activities, in which the pedal forces are generally lower, it may be desirable to have softer, more compliant springs, and thus greater deflection of the spring tip. An example of such an activity includes touring bicycles.

Trials of an embodiment of the present invention have been conducted using five springs 40 made of spring steel with a standard 52 tooth chain ring. The springs 40 had a length L of 95mm, a maximum thickness R of 6mm tapering to a minimum thickness T of 2mm provided an appropriate deflection of the tip of the springs 40. Such an embodiment produced a maximum deflection corresponding to a rotational advancement of the pedal cranks, relative to the chain ring 12, of approximately 3 teeth; that is, in the range of approximately 17° to 25°. As will be appreciated, the maximum deflection is dependent on the applied pedal force, which is dependent on many factors. However, as indicated above, the spring stiffness may be varied. It is envisaged that the maximum desirable deflection would be no greater than a relative rotational advancement corresponding to 5 teeth of the chain ring 12.

Providing a compliant rotational advancement of the pedal cranks, relative to the chain ring, of at least 5° allows sufficient energy to be stored in the springs during portion of the pedal downstroke in which the pedal force is increasing. The energy can be imparted to the rear driving wheel as the pedal force decreases.

The thickness of the springs 40 adjacent the crank boss 32 should be sufficient that the yield strength of the material is not exceeded. This will, in part, be determined by the material characteristics of the springs 40. However, a minimum thickness of the springs 40 adjacent the crank boss 32 can be determined.

Figure 9 shows a partially manufactured body 36 of the crank boss 32. A disc shaped billet 64 is provided, which will ultimately form the body 36. The slots 38 are machined into the billet 64 (two of which have been formed). In this embodiment, the terminal end 66 of each slot is formed such that the angle α subtended by the terminal ends 66 of adjacent slots 38 is 72°. Subsequently, circle segments 68, which have a chord that is approximately parallel to one of the slots 38, are removed to form the shape of the body 36. As stated previously, the shape of the body 36 in this embodiment is a pentagon.

It will be appreciated that the crank assembly of the present invention introduces compliance in the drive train of the bicycle. The compliance allows the pedal cranks to temporarily advance relative to the chain ring during portions of the pedal cycle, with energy being stored in the springs. Typically, this will occur in the first quadrant of the down stroke of the pedals. The stored energy can then subsequently be imparted to the chain (and thus the rear driving wheel) during the latter parts of the down stroke.

The pedal cycle naturally results in cyclic loading of the chain. Introducing a tailored amount of compliance facilitates smoothing energy transferred to the chain. This may result in less physiological stress to the cyclist. In addition, the efficiency of the entire system can be improved as the cyclist is able to apply load to the cranks earlier in the down stroke, which is then stored in the springs. Accordingly, more energy per cycle may be transferred to the rear (driving) wheel.

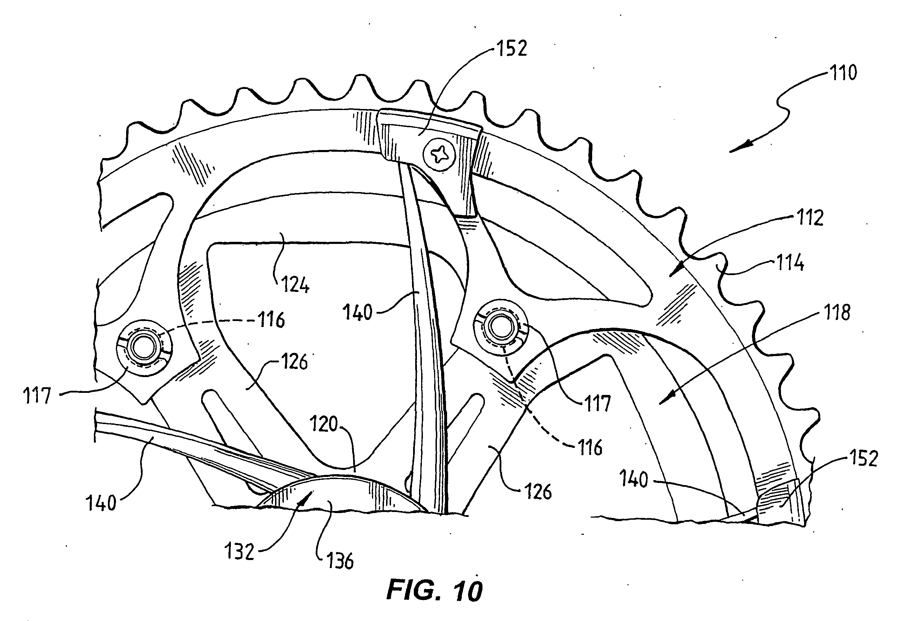

Figure 10 shows a partial view of a crank assembly 110 according to a second embodiment of the present invention. The crank assembly 110 has a chain ring 112, which is in the form of a thin ring provided with teeth 114 on the outer circumferential surface. The chain ring 112 further has five bolt holes 116 (two of which are shown in figure 10) that enable the chain ring 112 to be connected to a support disc 118. The support disc 118 has an inner portion 120, which has an central aperture (not shown); an outer portion 124; and five arms 126 that extend between the inner and outer portions. The support disc 118 further has five bolt holes that align with the bolt holes 116 in the chain ring 112 to receive a bolt 117.

The crank assembly 110 is installed on an axle (not shown) in a similar manner to the crank assembly 10 of the first embodiment, by a crank boss 132. The crank boss 132 has a body 136 that is provided with five slots (not shown), each of which receives the an elongate single leaf spring 140.

The tip of each spring 140 bears against an internal surface of the chain ring 112. Accordingly, it is the springs 140 that impart rotational motion from the crank boss 132 to the chain ring 112, and thus the rear wheel via the chain.

The crank assembly 110 has five load guides 152 (two are shown in figure 10) that are each fastened to the chain ring 112. Each load guides 152 provides lateral support on one side of the respective spring 140. Similarly, the support disc 118 provides lateral support on the opposing sides of the springs 140. The springs 140 all act in the same plane as the teeth 114 of the chain ring 112, and thus the chain itself. This facilitates alignment of the spring loads with the chain load, which minimizes eccentric loading.

As clearly shown in figure 10, the springs 140 taper from a maximum thickness adjacent the crank boss 132 to a minimum at the tip that bears against the chain ring 112. However, the depth of each spring 140 is constant along its length.

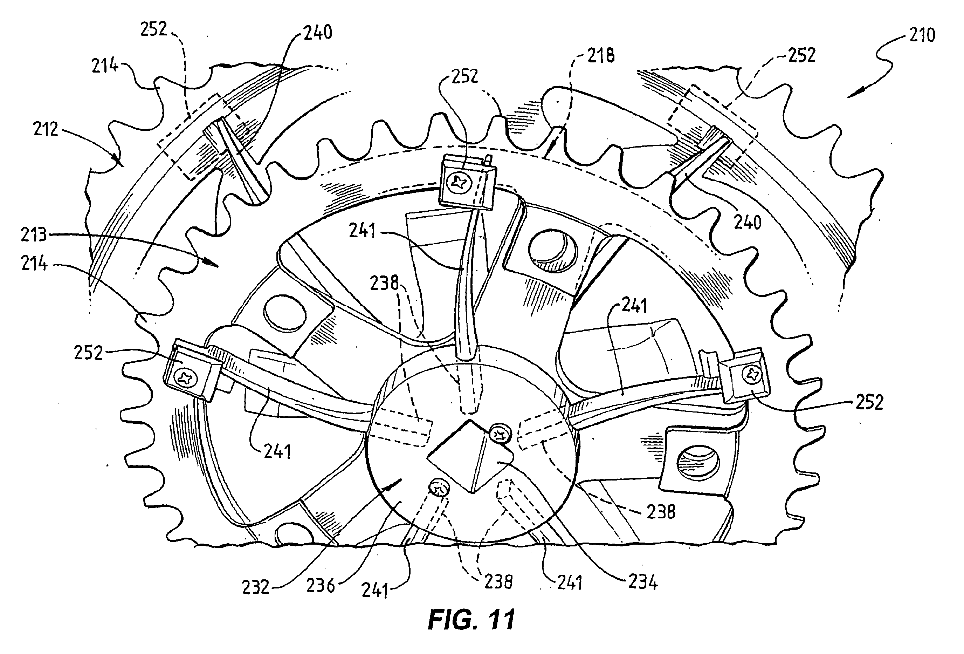

Figure 11 shows a partial view of the inner side of a crank assembly 210 according to a third embodiment of the present invention. The crank assembly 210 has a big chain ring 212, and a little chain ring 213 (so called because of the overall diameter, and thus number of teeth on each). Both chain rings 212, 213 are in the form of a thin ring provided with teeth 214 on the outer circumferential surface.

The crank assembly 210 is installed on an axle (not shown) which passes through an aperture 234 in a crank boss 232. The crank boss 232 has a body 236, which supports the chain rings 213, 214 such that each can rotate on the body 236 independently of one another. The body 236 is provided with two sets of five slots 238, each of which receives the an elongate single leaf spring 240. 241. The springs 240 in the first set are associated with the big chain ring 212, while the springs 241 of the second set are associated with the little chain ring 213.

The tip of each spring 240 bears against an internal surface of the big chain ring 212. Accordingly, the springs 240 that impart rotational motion from the crank boss 232 to the chain ring 212, and thus the rear wheel via the chain. When the chain is positioned on the big chain ring 212, it is the springs 240 that will be loaded, and thus deflected. The springs 240 act in the same plane as the teeth of the big chain ring 212.

Similarly, the tip of each spring 241 bears against an internal surface of the little chain ring 213. When the chain is positioned on the little chain ring 213, it is the springs 241 that will be loaded, and thus deflected. The springs 241 act in the same plane as the teeth of the little chain ring 213.

Accordingly, the spring loads are aligned with the chain load, whichever chain ring 212, 213 is being used. Thus, eccentric loading of the springs 240, 241 and chain is eliminated within bicycle engineering tolerances.

Load guides 252 are provided on each of the chain rings 212, 213. On the big chain ring 212, the load guides are positioned on the side that is remote from the little chain ring 213. Similarly, on the little chain ring 213, the load guides are positioned on the side that is remote from the big chain ring 212. Each load guide 252 provides lateral restraint on one side of a respective spring 240, 241. The crank assembly 210 is further provided with a support ring 218 that is disposed between the big and little chain rings 212, 213. The support ring can be connected to one of the chain rings 212, 213, such that the other chain ring 213, 212 can rotate independently of both the support ring 218 and the other chain ring 212, 213. The support ring 218 provides lateral support to the springs 240, 241.

As clearly shown in figure 11, the springs 240, 241 all taper from a maximum thickness adjacent the crank boss 232 to a minimum at the tip that bears against the respective chain ring 212, 213. However, the depth of each spring 240, 241 is constant along its length.

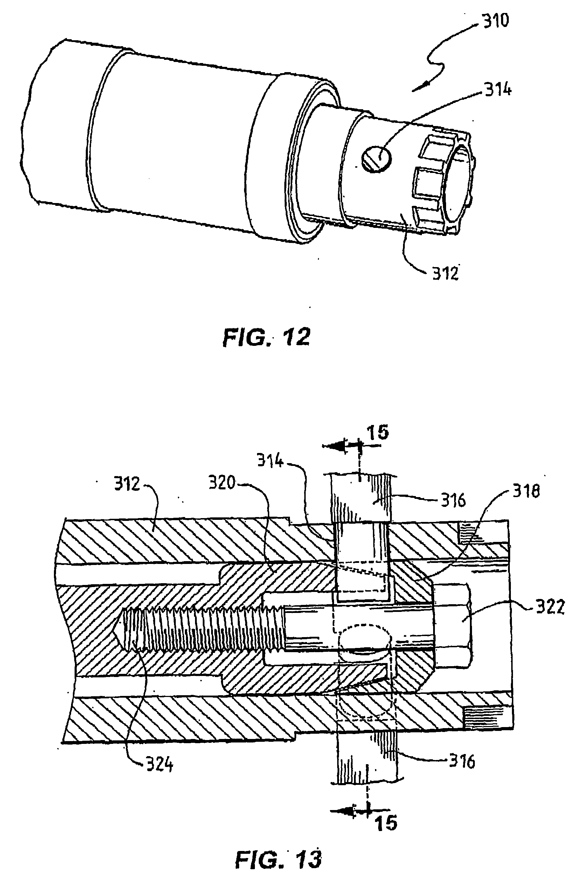

Figure 12 shows a bottom bracket 310 that can be used in a crank assembly (not shown) according to a third embodiment. The bottom bracket 310 has an axle 312 onto which cranks (not shown) are attached. The axle 312 has holes 314 through, such that leaf springs 316 can be supported by the axle 314 itself.

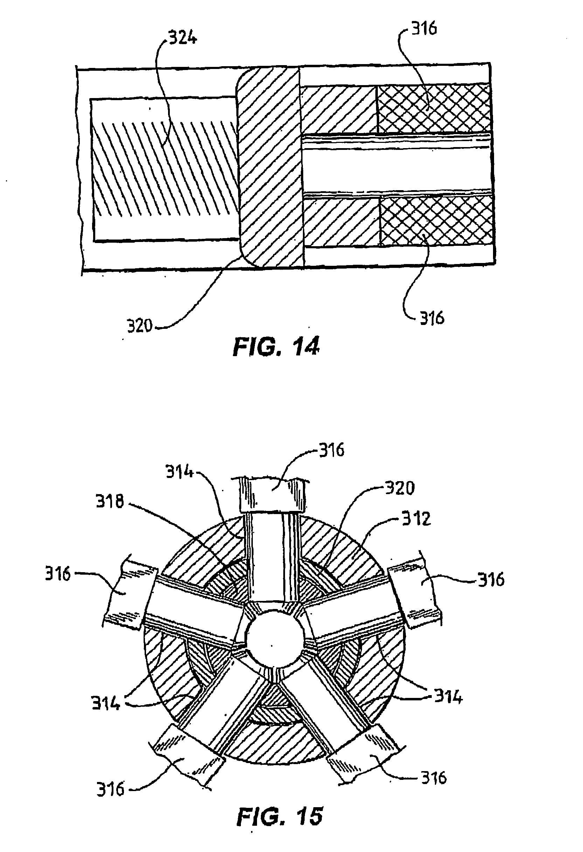

Figures 13 to 15 show the axle 312 in further detail. As shown in figure 13, the axle 312 is generally cylindrical and hollow. In this embodiment, the springs 316 extend initially radially from the axle 314. Opposing clamping elements 318, 320 are provided within the axle 312. The springs 316 are clamped between the opposing clamping elements 318, 320. The outer clamping element 318 has a concave tapering surface and an aperture through which a bolt 322 extends. The inner clamping element has a convex tapering surface and a portion with an internal thread 324 for engagement with the threads on the bolt 322. Each spring 316 is positioned such that an end portion near the root of the respective spring 316 is between slots in the opposing clamping elements 318, 320.

Accordingly, in an embodiment of the crank assembly that uses the bottom bracket 310, the springs are supported on the axle 312 itself. Accordingly, in such an embodiment, the crank assembly does not have a crank boss.

It will be understood to persons skilled in the art of the invention that many modifications may be made without departing from the scope of the invention.

For example, the number of springs provided for each chain ring in a crank assembly may be more or less than five. For example, for a crank assembly for use in track cycling, in which the pedal forces can be particularly high, it may be desirable to have six or more springs for the chain ring. In contrast, for particularly small chain rings, which may be used on mountain bikes, it may be desirable to have four or less springs for the respective chain ring.

The orientation of the springs may be either tangential or radial from the crank boss. Furthermore, the springs may be either curved or linear.

In some embodiments, the lateral support for the tip of the springs may be provided by slots in the chain ring itself. In such embodiments, the need for load guides and/or support rings may be obviated.

It may be desirable to pre-load the springs, such that backlash is minimized or eliminated. This may be achieved by providing springs that are oversize with respect to the crank boss to chain ring rim distance.

It is to be appreciated that the crank assembly of the present invention may be employed on many different human-powered vehicles, including unicycles, bicycles, tricycles and hand-cycles. Furthermore, the vehicles can, in addition to wheeled vehicles, be air borne or water borne vehicles, in which the crank assembly drives propellers or impellers. The chain ring may be used to drive a chain, belt, shaft or a gear train.

The amount of deflection of the springs is proportional to the applied load at the pedals. Accordingly, it is possible to observe the torque applied to the crank assembly, which can provide information regarding instantaneous power and torque loads. This may be achieved by simply measuring the deflection of the tip. Alternatively, this may be achieved by installing strain gauges placed appropriately in the drive path.

In the claims of this application and in the description of the invention, except where the context requires otherwise due to express language or necessary implication, the words "comprise" or variations such as "comprises" or "comprising" are used in an inclusive sense, i.e. to specify the presence of the stated features but not to preclude the presence or addition of further features in various embodiments of the invention.

## Claims

1. A crank assembly (10) for use on a human powered machine, the crank assembly comprising:
one or more cranks that are connectable to opposing ends of an axle (30) of the machine;
a chain ring (12) having teeth (14) for engagement with a drive element, the chain ring being capable of being supported on the axle such that the chain ring can rotate relative to the axle; and
a set of two or more springs (40);
whereby each spring is a leaf spring having a root rotationally fixed relative to the axle and a tip that bears against the chain ring to impart force to the chain ring; **characterized in that** the thickness of each spring tapers from the root to the tip in a plane of the chain ring; and **in that** the set of springs allows a compliant rotational advancement of the cranks relative to the chain ring of at least 5°.

2. A crank assembly as claimed in claim 1, wherein the springs (40) allow a compliant rotational advancement of the cranks relative to the chain ring (12) of up to approximately 25°.

3. A crank assembly as claimed in either claim 1 or 2, wherein each spring (40) is positioned to extend at least partially tangentially with respect to the axle (30).

4. A crank assembly as claimed in claim 3, wherein each spring (40) is off-set in relation to the axle (30).

5. A crank assembly as claimed in any one of claims 1 to 4, wherein the springs (40) are curved when no external forces are applied to the crank assembly.

6. A crank assembly as claimed in any one of claims 1 to 5, wherein the teeth (14) lie in the plane of the chain ring (12).

7. A crank assembly as claimed in any one of claims 1 to 6, further comprising supports that laterally support the springs toward the tip.

8. A crank assembly as claimed in claim 7, wherein the supports comprise load guides (52) that are each fastened to one side of the chain ring (12) and provide lateral support on the respective side of a respective spring (40).

9. A crank assembly as claimed in either claim 7 or 8, wherein the supports comprise a support disc (18) that is positioned on one side of the chain ring (12) and provides lateral support on the respective side to the springs (40).

10. A crank assembly as claimed in any one of claims 1 to 9, further comprising a crank boss (32) that is mountable on the axle (30) and is rotationally fixed to the axle, each spring (40) being attached to the crank boss.

11. A crank assembly as claimed in claim 10, wherein a portion of each spring is received in a slot in the crank boss.

12. A crank assembly as claimed in claim 1, wherein the set of springs comprises 5 springs.

13. A crank assembly as claimed in any one of claims 1 to 12, comprising:
two or more chain rings (12) that are both supportable on the axle (30), each chain ring being able to independently rotate relative to the axle; and
one set of the leaf springs for each chain ring, such that the springs in each set independently impart force to the respective chain ring.

## Patentansprüche

1. Kurbelanordnung (10) zur Verwendung an einer mit Menschenkraft betriebenen Maschine, wobei die Kurbelanordnung Folgendes aufweist:
eine oder mehrere Kurbeln, die mit entgegengesetzten Enden einer Achse (30) der Maschine verbunden werden können,
ein Kettenblatt (12) mit Zähnen (14) für den Eingriff mit einem Antriebselement, wobei das Kettenblatt auf der Achse gelagert werden kann, so dass sich das Kettenblatt relativ zur Achse drehen kann, und
einen Satz von zwei oder mehr Federn (40),
wobei jede Feder eine Blattfeder mit einer Wurzel, die relativ zur Achse drehbefestigt ist, und einer Spitze ist, die gegen das Kettenblatt drückt, um dem Kettenblatt eine Kraft mitzuteilen, **dadurch gekennzeichnet, dass** sich die Dicke jeder Feder von der Wurzel zur Spitze in einer Ebene des Kettenblatts verjüngt und dass der Satz Federn die federnde rotatorische Voranbewegung der Kurbeln relativ zum Kettenblatt von wenigstens 5° ermöglicht.

2. Kurbelanordnung nach Anspruch 1, wobei die Federn (40) eine federnde rotatorische Voranbewegung der Kurbeln relativ zum Kettenblatt (12) von bis zu etwa 25° ermöglichen.

3. Kurbelanordnung nach Anspruch 1 oder 2, wobei jede Feder (40) so positioniert ist, dass sie in Bezug auf die Achse (30) wenigstens teilweise tangential verläuft.

4. Kurbelanordnung nach Anspruch 3, wobei jede Feder (40) im Verhältnis zur Achse (30) versetzt ist.

5. Kurbelanordnung nach einem der Ansprüche 1 bis 4, wobei die Federn (40) gekrümmt sind, wenn keine externen Kräfte auf die Kurbelanordnung ausgeübt werden.

6. Kurbelanordnung nach einem der Ansprüche 1 bis 5, wobei die Zähne (14) in der Ebene des Kettenblatts (12) liegen.

7. Kurbelanordnung nach einem der Ansprüche 1 bis 6, die ferner Stützen aufweisen, die die Federn in Richtung auf die Spitze seitlich stützen.

8. Kurbelanordnung nach Anspruch 7, wobei die Stützen Lastführungen (52) aufweisen, die jeweils an einer Seite des Kettenblatts (12) befestigt sind und für seitliche Unterstützung auf der jeweiligen Seite einer jeweiligen Feder (40) sorgen.

9. Kurbelanordnung nach Anspruch 7 oder 8, wobei die Stützen eine Stützscheibe (18) aufweisen, die auf einer Seite des Kettenblatts (12) positioniert ist und für seitliche Unterstützung auf der jeweiligen Seite der Federn (40) sorgen.

10. Kurbelanordnung nach einem der Ansprüche 1 bis 9, die ferner ein Kurbelnabe (32) aufweist, die an der Achse (30) montierbar ist und drehend an der Achse befestigt ist, wobei jede Feder (40) an der Kurbelnabe angebracht ist.

11. Kurbelanordnung nach Anspruch 10, wobei ein Teil jeder Feder in einer Aussparung in der Kurbelnabe aufgenommen ist.

12. Kurbelanordnung nach Anspruch 1, wobei der Satz Federn 5 Federn umfasst.

13. Kurbelanordnung nach einem der Ansprüche 1 bis 12, die Folgendes umfasst:
zwei oder mehr Kettenblätter (12), die beide auf der Achse (30) gelagert werden können, wobei jedes Kettenblatt sich unabhängig von der Achse drehen kann, und
einen Satz der Blattfedern für jedes Kettenblatt, so dass die Federn in jedem Satz dem jeweiligen Kettenblatt unabhängig Kraft mitteilen.

## Revendications

1. Pédalier (10) destiné à être utilisé sur une machine à propulsion humaine, le pédalier comprenant :
une ou plusieurs manivelles qui peuvent être connectées à des extrémités opposées d'un axe (30) de la machine ;
un garde chaîne (12) comportant des dents (14) destinées à s'engager avec un élément d'entraînement, le garde chaîne pouvant être supporté sur l'axe de façon à pouvoir tourner par rapport à l'axe ; et
un ensemble de deux ou plusieurs ressorts (40) ;
chaque ressort étant un ressort à lames ayant une base fixe en rotation par rapport à l'axe et une pointe qui porte contre le garde chaîne afin de conférer une force au ressort à lame ; **caractérisé en ce que** l'épaisseur de chaque ressort s'amincit de la base à la pointe dans un plan du garde chaîne ; et **en ce que** l'ensemble de ressorts permet une avancée en rotation élastique des manivelles par rapport au garde chaîne d'au moins 5°.

2. Pédalier selon la revendication 1, dans lequel les ressorts (40) permettent une avancée en rotation élastique des manivelles par rapport au garde chaîne (12) de jusqu'à approximativement 25°.

3. Pédalier selon l'une ou l'autre de la revendication 1 ou 2, dans lequel chaque ressort (40) est positionné de façon à s'étendre au moins partiellement tangentiellement à l'axe (30).

4. Pédalier selon la revendication 3, dans lequel chaque ressort (40) est décalé par rapport à l'axe (30).

5. Pédalier selon l'une quelconque des revendications 1 à 4, dans lequel les ressorts (40) sont courbes quand aucune force externe n'est appliquée au pédalier.

6. Pédalier selon l'une quelconque des revendications 1 à 5, dans lequel les dents (14) reposent dans le plan du garde chaîne (12).

7. Pédalier selon l'une quelconque des revendications 1 à 6, comprenant en outre des supports qui supportent latéralement les ressorts vers la pointe.

8. Pédalier selon la revendication 7, dans lequel les supports comprennent des guides de charge (52) qui sont chacun fixés à un côté du garde chaîne (12) et fournissent un support latéral sur le côté respectif d'un ressort respectif (40).

9. Pédalier selon l'une quelconque des revendications 7 ou 8, dans lequel les supports comprennent un disque de support (18) qui est positionné sur un côté du garde chaîne (12) et fournit un support latéral sur le côté respectif aux ressorts (40).

10. Pédalier selon l'une quelconque des revendications 1 à 9, comprenant en outre un moyeu de manivelle (32) pouvant être monté sur l'axe (30) et fixé avec faculté de rotation à l'axe, chaque ressort (40) étant attaché au moyeu de manivelle.

11. Pédalier selon la revendication 10, dans lequel une partie de chaque ressort est reçue dans une fente dans le moyeu de manivelle.

12. Pédalier selon la revendication 1, dans lequel l'ensemble de ressorts comprend 5 ressorts.

13. Pédalier selon l'une quelconque des revendications 1 à 12, comprenant :
deux ou plusieurs garde chaîne (12) qui peuvent tous les deux être supportés sur l'axe (30), chaque garde chaîne pouvant tourner indépendamment par rapport à l'axe ; et
un ensemble des ressorts à lames pour chaque garde chaîne, de telle sorte que les ressorts dans chaque ensemble confèrent indépendamment une force au garde chaîne respectif.
